# EUROPÄISCHE PATENTSCHRIFT

(11) **EP 2 255 946 B1**
(45) Veröffentlichungstag und Bekanntmachung des Hinweises auf die Patenterteilung: **18.05.2016**
(21) Anmeldenummer: 10004841.2
(22) Anmeldetag: 07.05.2010
(51) Int. Cl.: B29C 47/34, B29C 47/90, B29C 47/92, B65G 13/08

(54) **Vorrichtung zur Unterstützung von Rohren in Extrusionslinien**
Device for supporting pipes in extrusion lines
Dispositif de soutien de tuyaux dans des lignes d'extrusion

(30) Priorität: 30.05.2009 DE 102009023438
(43) Veröffentlichungstag der Anmeldung: 01.12.2010
(73) Patentinhaber: INOEX GmbH, 32547 Bad Oeynhausen (DE)
(72) Erfinder: Klever, Jörg, 49843 Halle (DE)
(74) Vertreter: Seewald, Jürgen

(56) Entgegenhaltungen:
- EP-A2- 1 955 838
- DE-A1-102006 044 643
- GB-A- 1 242 441
- US-A- 4 388 061
- US-A- 4 793 470
- US-A- 5 038 924

## Beschreibung

Die vorliegende Erfindung betrifft eine Vorrichtung zur Unterstützung von Rohren in Extrusionslinien gemäß dem Oberbegriff des Anspruchs 1.

Eine gattungsgemäße Vorrichtung ist aus der DE 10 2007 007 196 A1 bekannt. Die einzelnen Glieder dieser Gliederkette besitzen eine im Betrieb an einem extrudierten Rohr anliegende Stützfläche und eine dieser gegenüberliegende Keilfläche. Die Keilflächen stützen sich jeweils auf Gegenkeilflächen eines Grundrahmens ab. Zur Anpassung an die gefahrene Rohrdimension sind die Keilflächen auf den Gegenkeilflächen verschiebbar, so dass die Gliederkette insgesamt radial verlagert wird. Die Glieder sind im Bereich der Längsseiten ihrer Stützflächen über Filmscharniere oder Klavierbänder gelenkig miteinander verbunden.

Bei der oben beschriebenen Vorrichtung erfolgt die Verstellung der Rohrunterstützung von einem Nenndurchmesser auf einen anderen Nenndurchmesser im laufenden Betrieb der Extrusionslinie in dem diese aktiv, z.B. motorisch angetrieben wird. Das trifft beispielsweise auch auf die aus der DE 10 2005 028 088 A1, DE 10 2004 059 515 B3, DE 10 2006 044 643 A1 und der US 4,388,061 A bekannten Vorrichtungen zu.

In der WO 2004/106034 ist eine Kombirolle zur Rohrunterstützung beschrieben, die mit Mitteln, insbesondere Federmitteln, ausgestattet ist, welche dafür sorgen, dass sich die Rolle bei zunehmender Belastung durch das abzustützende Rohr nach unten bewegt und umgekehrt. Diese Lösung hat den Nachteil, dass nur für jeweils einen bestimmten Rohrdurchmesser eine optimale Abstützung vorliegt. Daher ist vorgesehen, mehrere Rollen mit unterschiedlicher Geometrie hintereinander anzuordnen.

Aufgabe der vorliegenden Erfindung ist es, eine weitere gatfungsgemäße Vorrichtung zur Verfügung zu stellen.

Diese Aufgabe wird erfingdungsgemäß mit einer Vorrichtung zur Unterstützung von Rohren in Extrusionslinien gelöst, die die Merkmale des Anspruchs 1.

Aufgrund der an den Enden der Kettenglieder vorgesehenen, miteinander kämmenden Zahnradkonturen ist sicher gestellt, dass sich die Winkelstellungen der einzelnen Kettenglieder zueinander bei Verstellung identisch ändern. Dadurch ist es möglich, die Gelenkgliederkette an unterschiedliche Rohrdurchmesser anzupassen, wobei sich der Umschlingungswinkel dahingehend ändert, dass er bei größeren Rohrdurchmessern kleiner und bei kleineren Rohrdurchmessern größer ist. Dabei soll ein extrudiertes Rohr mindestens auf 120° seines Umfangs unterstützt werden.

Da die einzelnen Ketteglieder nach Art eines Getriebes miteinander verbunden sind, ist es ausreichend, wenn an ein links und rechts vom Scheitelpunkt der Gelenkgliederkette angeordnetes Kettenglied jeweils eine Abstützung angreift. Dabei kann die Abstützung der Gelenkgliederkette selbsttätig oder zwangsgesteuert auf die jeweiligen gefahrenen Rohrdurchmesser eingestellt werden. Wenn die Kette zwischen den Abstützpunkten schwerer ist als zwischen den Abstützpunkten und den Enden der Ketten, verstellt sich die Gelenkgliederkette unter Schwerkraftwirkung automatisch auf einen kleineren Durchmesser, wenn z.B. in der Extrusionslinie von einem größeren Durchmesser auf einen kleineren Durchmesser umgestellt wird. Bei einem Dimensionswechsel im laufenden Betrieb ergibt sich zwischen einem zuvor gefahrenen großen Nenndurchmesser und einem anschließend zu fahrenen kleineren Nenndurchmesser ein konisches Übergangsstück mit kleiner werdendem Durchmesser, so dass die Gelenkgliederkette unter Schwerkraftwirkung selbsttätig sukzessiv "zufährt". Im umgekehrten Fall, also beim Übergang von einem kleineren gefahrenen Rohrdurchmesser auf einen größeren zu fahrenden Rohrdurchmesser drückt das ebenfalls konische Übergangsstück aufgrund des dann größer werdenden Durchmessers die Gelenkgliederkette entgegen der Schwerkraft auseinander, so dass diese sich selbsttätig auf den neuen Durchmesser einstellt. Anstelle dieser selbsttätigen Einstellung der Gelenkgliederkette kann auch eine zwangsgesteuerte Verstellung der Gelenkgliederkette vorgesehen sein, z.B. dadurch, dass mindestens eine der Abstützungen als Aktuator, z.B. als Hydraulikzylinder ausgebildet ist.

Im einfachsten Fall bilden die dem extrudierten Rohr zugewandten Stirnflächen der Kettenglieder eine Gleitfläche für das Rohr, d.h. das extrudierte Rohr liegt direkt auf den Kettengliedern auf.

Um die Reibung zwischen der Rohrunterstützung und dem extrudierten Rohr zu reduzieren ist in vorteilhafter Ausgestaltung der Erfindung vorgesehen, die Gelenkgliederkette mit Rollen auszustatten, so dass anstelle der Gleitreibung eine Rollreibung vorliegt. Das hat auch den Vorteil, dass die Rohrunterstützung beim Übergang von einem kleineren zu fahrenden Durchmesser auf einen größeren zu fahrenden Durchmesser leichter auseinander gedrückt wird.

Die Erfindung wird nachstehend anhand von Ausführungsbeispielen näher erläutert. In der dazugehörigen Zeichnung zeigt:
- Fig. 1: eine Seitenansicht einer Rohrextrusionslinie
- Fig. 2: eine perspektivische Ansicht einer erfindungsgemäßen Vorrichtung gemäß einer ersten Ausführungsform der Erfindung, wobei die Vorrichtung auf einen großen Rohrdurchmesser eingestellt ist,
- Fig. 3: eine Draufsicht auf die Darstellung gemäß Fig. 2,
- Fig. 4: eine Darstellung gemäß Fig. 2 bei auf einen kleinen Rohrdurchmesser eingestellter Vorrichtung,
- Fig. 5: eine Draufsicht auf die Darstellung gemäß Fig. 4,
- Fig. 6: eine vergrößerte Einzelheit der Darstellung gemäß den Fig. 2 bis 5 mit zwei sich überlappenden Kettengliedern,
- Fig. 7: eine Vorrichtung gemäß einer zweiten Ausführungsform der Erfindung in Vorderansicht, wobei die Vorrichtung auf einen großen Rohrdurchmesser eingestellt ist und die vorderen Stützarme der Vorrichtung weggelassen wurden,
- Fig. 8: eine Darstellung gemäß Fig. 7 mit dargestellten vorderen Stützarmen,
- Fig. 9: eine Darstellung gemäß Fig. 7 bei auf einen kleineren Rohrdurchmesser eingestellter Vorrichtung,
- Fig. 10: eine Darstellung gemäß Fig. 9 mit dargestellten vorderen Stützarmen, und
- Fig. 11: eine Prinzipdarstellung der Verstellung der Rohrunterstützung.

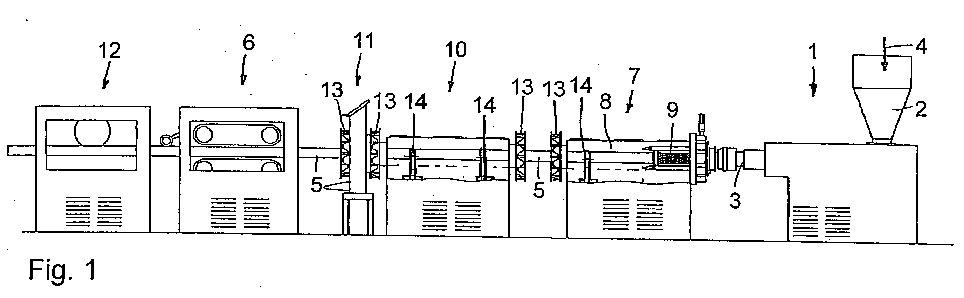

Die in Fig. 1 dargestellte Extrusionslinie umfasst eine Extrudereinheit 1 mit einem Aufgabetrichter 2, einer aus der Zeichnung nicht ersichtlichen Extruderschnecke mit einem Rohrkopf 3. Über den Aufgabetrichter 2 wird ein thermoplastischer Kunststoff 4 in Granulat- oder Pulverform der Extrudereinheit 1 zugeführt. In dieser wird das Granulat bzw. Pulver erwärmt, geknetet und plastifiziert. Anschließend wird der Kunststoff 4 als formbare Masse von der Extruderschnecke in den Rohrkopf 3 gefördert und dort durch einen ringförmigen Austrittsspalt gedrückt.

Nach dem Austritt aus dem Rohrkopf 3 wird das heiße, noch verformbare Rohr 5 mittels eines am Ende der Extrusionslinie angeordneten Raupenabzugs 6 durch eine Kalibrier- und Kühleinheit 7 gezogen, die einen Vakuumtank 8 mit einer an dessem Eingang angeordneten Kalibrierhülse 9 aufweist. In der stufenlos im Durchmesser einstellbaren Kalibrierhülse 9 wird das extrudierte, noch formbare Rohr 5 auf den gewünschten Durchmesser fixiert. Nach dem Verlassen der Kalibrier- und Kühleinheit 7 tritt das Rohr 5 in eine Kühlstrecke 10 ein, in der es auf Raumtemperatur abgekühlt wird. Zwischen der Kühlstrecke 10 und dem Raupenabzug 6 ist ein Ultraschallscanner 7 angeordnet, mit dem der Durchmesser und die Wandstärke des extrudierten Rohres 5 erfasst werden. Dem Raupenabzug 6 schließt sich eine Trennsäge 12 an, mit der das Rohr 5 abgelängt wird. Des weiteren sind in der Rohrextrusionslinie Dichtungen 13 vorgesehen, die das durchlaufende Rohr 5 abdichtend umschließen.

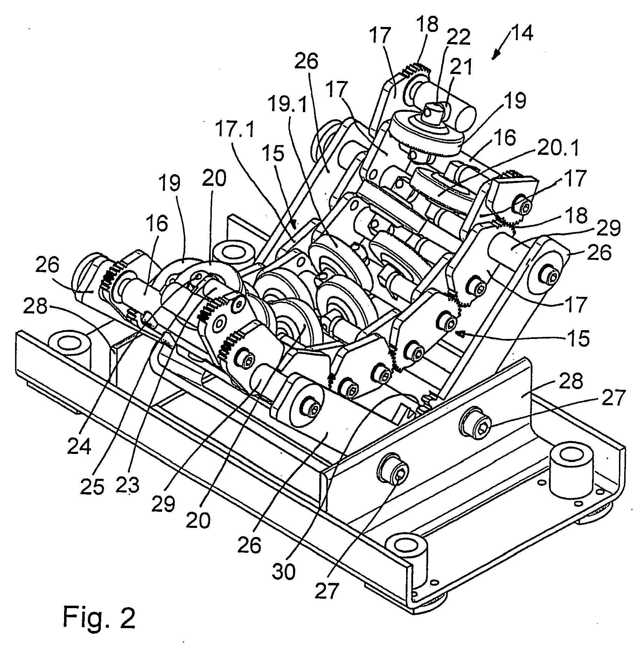

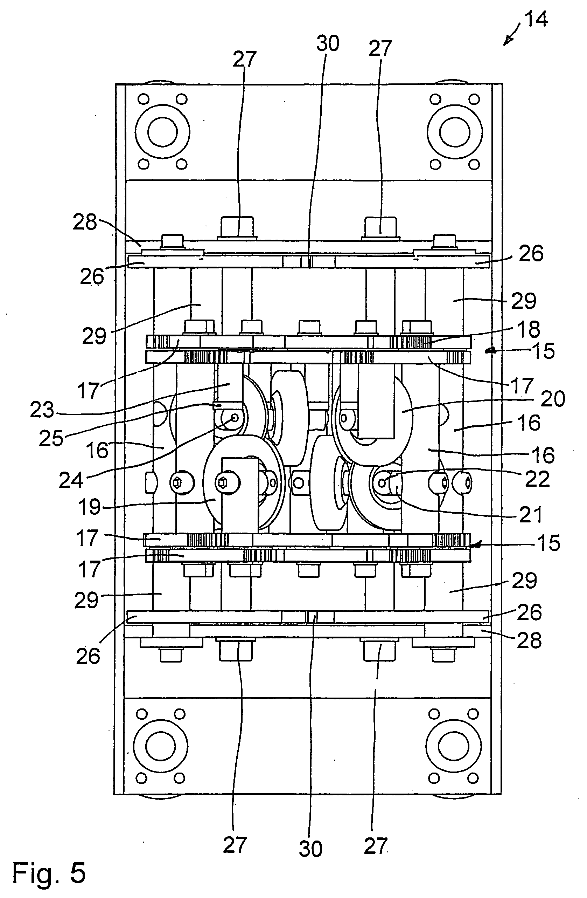

Da das extrudierte Rohr 5 erst nach Verlassen der Kühlstrecke 10 ausgehärtet, d.h. formstabil ist, muss es zuvor abgestützt werden, um ein Durchhängen und damit ein Deformieren zu vermeiden. Dazu sind in der Kalibrier- und Kühleinheit 7 eine und in der Kühlstrecke 10 zwei Rohrunterstützungen 14 vorgesehen, deren Aufbau und Wirkungsweise nachstehend anhand der Figuren 2 bis 10, die zwei verschiedenen Ausführungsformen der Erfindung zeigen, näher erläutert wird.

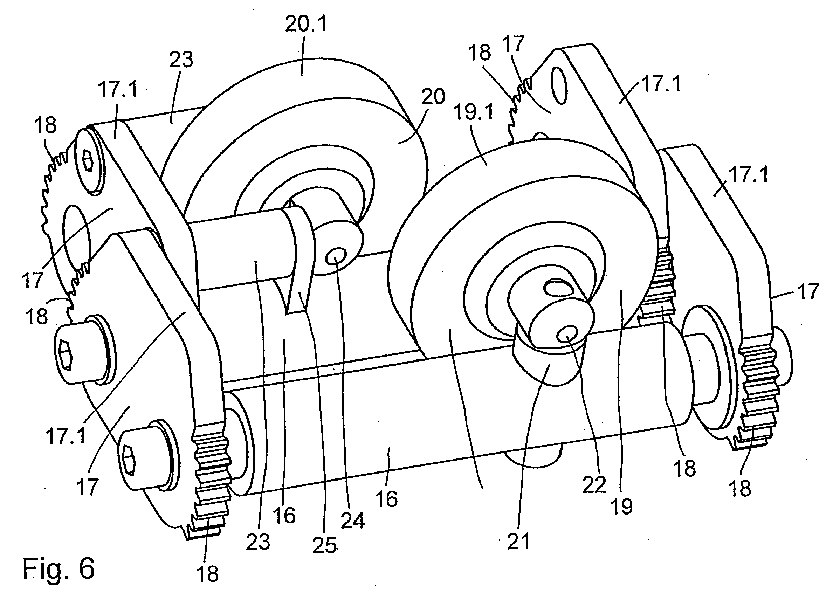

Die in den Figuren 2 bis 6 gezeigte Rohrunterstützung 14 weist zwei Gelenkgliederketten 15 auf, die durch Kettenbolzen 16 parallel zueinander beabstandet angeordnet sind. Jede Gelenkgliederkette 15 weist in zwei Ebenen angeordnete Kettenglieder 17 auf, die sich von Ebene zu Ebene überlappen. Die Kettenbolzen 16 sind in den Überlappungsbereichen im Durchmesser reduziert, wie am besten aus Fig. 6 hervorgeht und bilden die gelenkigen Verbindungen zwischen den Kettengliedern 17 in deren Überlappungsbereichen. Die Kettenglieder 17 jeder Ebene sind an ihren, einander zugewandeten Enden mit identischen Zahnradkonturen 18 versehen, wobei die zur gleichen Ebene gehörenden Kettenglieder 17 miteinander kämmen.

Zwischen den beiden Gelenkgliederketten 15 sind zwei Reihen von Rollen 19 bzw. 20 angeordnet, wobei die Rollen 19 der einen Reihe auf Lücke zu den Rollen 20 der anderen Reihe angeordnet sind. Dabei sind die Rollen 19 jeweils im Bereich der Zahnradkonturen 18 der inneren Kettengliedern 17, also zwischen diesen und die Rollen 20 jeweils mittig zu den inneren Kettengliedern 17 angeordnet. Diese Anordnung verlangt unterschiedliche Lagerungen der Rollen 19 und 20. So können die Rollen 19 wegen der sich ändernden Winkelstellung zwischen zwei benachbarten Kettengliedern 17 während der Verstellung der Rohrunterstützung 14 nicht direkt an diesen Kettengliedern 17 gelagert werden. Die Rollen 19 sind daher an den Kettenbolzen 16 gelagert, wie am besten aus Fig. 6 hervorgeht. Dazu ragen von jeweils zwei benachbarten Kettenbolzen 16 Stehbolzen 21 senkrecht nach oben, an denen die Drehachsen 22 der Rollen 19 gelagert sind. Die Rollen 20 sind direkt an den zugeordneten Kettengliedern 17 gelagert. Dazu ragen von den Kettengliedern 17 parallel zu den Kettenbolzen 16 angeordnete Stehbolzen 23 nach innen ab, an denen die Drehachsen 24 der Rollen 20 gelagert sind. Da die Rollen 20 ebenso wie die Rollen 19 durch das zu unterstützende Rohr 5 auf Druck belastet werden, werden die dadurch auf Biegung beanspruchten Stehbolzen 23 über an ihren Enden vorgesehene Stützbeine 25 an den stabilen Kettenbolzen 16 abgestützt.

Die Rollen 19 und 20 sind so gelagert, dass sie die Stirnflächen 17.1 der Kettenglieder 17 nach oben überragen. Dadurch dienen die Umfangsfläche 19.1 bzw. 20.1 als Rollflächen für das in der Extrusionslinie abzustützende Rohr 5.

Neben den oben beschriebenen Bauteilen weist die Rohrunterstützung 14 weiterhin zwei Paare von Stützarmen 26 auf, die an ihren unteren Enden über Drehgelenke 27 schwenkbar an Lagerschildern 28 gelagert sind. Die oberen Enden der Stützarme 26 sind über Distanzbolzen 29 mit den jeweils vorletzten Kettengliedern 17 der Gelenkgliederketten 15 drehgelenkig verbunden.

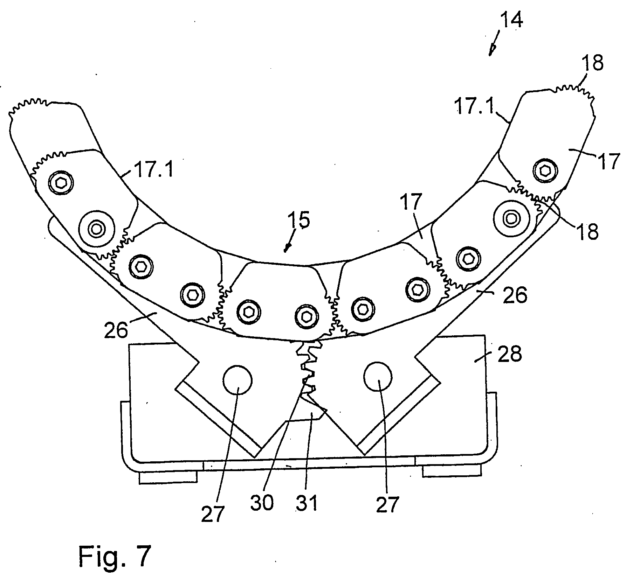

Im Bereich ihrer unteren Enden sind die Stützarme 26 jeweils mit einer Zahnradkontur 30 versehen, die konzentrisch zu den Drehachsen 27 angeordnet ist. Diese Zahnradkonturen 30 kämmen miteinander. Dadurch ist gewährleistet, dass die beiden Stützarme 26 sich immer synchron bewegen. Diese bei allen Ausführungsbeispielen identisch ausgeführten Zahnradkonturen 30 gehen am besten aus den Darstellungen gemäß den Fig. 7 bis 10 hervor. Aus diesen Darstellungen ist auch ersichtlich, dass bei einem der Stützarme 26 der letzte Zahn 31 der Zahnradkontur 30 gegenüber den anderen Zähnen verlängert ist. Er bildet auf diese Weise einen Anschlag mit dem zugeordneten anderen Stützarm 26. Mit diesem Anschlag ist der maximale Öffnungswinkel zwischen den Stützarmen 26 festgelegt. Dieser Winkel ist so definiert, dass auch bei dem größten auf der Extrusionslinie fahrbaren Rohrdurchmesser ein Mindestumschlingungswinkel des Rohrumfangs durch die Rohrunterstützung 14 von mindestens 120° gewährleistet ist.

Die Arbeitsweise der oben beschriebenen Rohrunterstützung 14 wird nachstehend für Umstellungen der Rohrextrusionslinie von einem Nenndurchmesser auf einen anderen Nenndurchmesser eines zu produzierenden Rohres 5 bei laufendem Betrieb beschrieben.

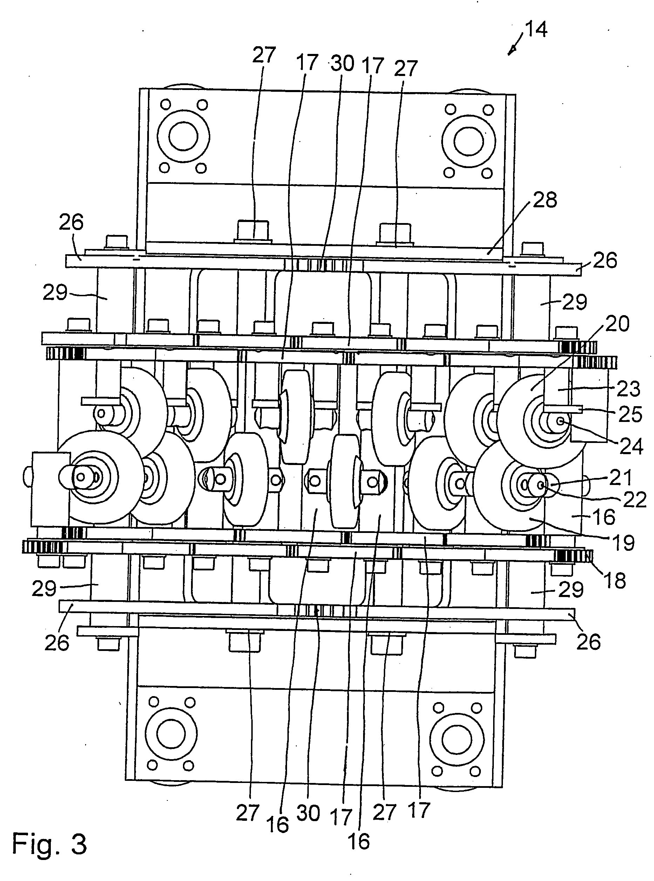

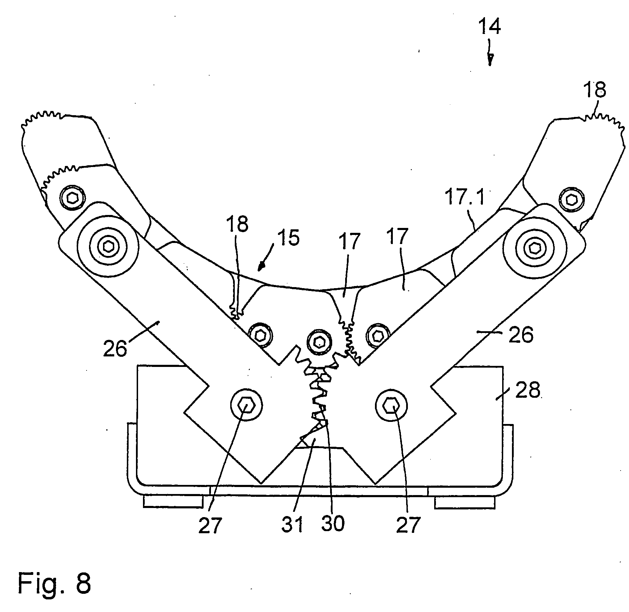

Ausgangspunkt ist der größte auf der Extrusionslinie fahrbare Rohrdurchmesser. Die Rohrunterstützung 14 hat dann die in den Fig. 2 und 3 dargestellte Einstellung. Wie in Verbindung mit den Fig. 7 und 8 hervorgeht, liegen die Anschläge 31 der Stützarme 26 an dem jeweils zugeordneten anderen Stützarm 26 an. Mit dieser Einstellung ist garantiert, dass das zu unterstützende Rohr 5 mindestens auf einen Teilumfang von 120° unterstützt wird. Das extrudierte Rohr 5 liegt auf den Rollen 19 und 20 auf und erfährt durch diese eine ausreichende Abstützung bei Rollreibung.

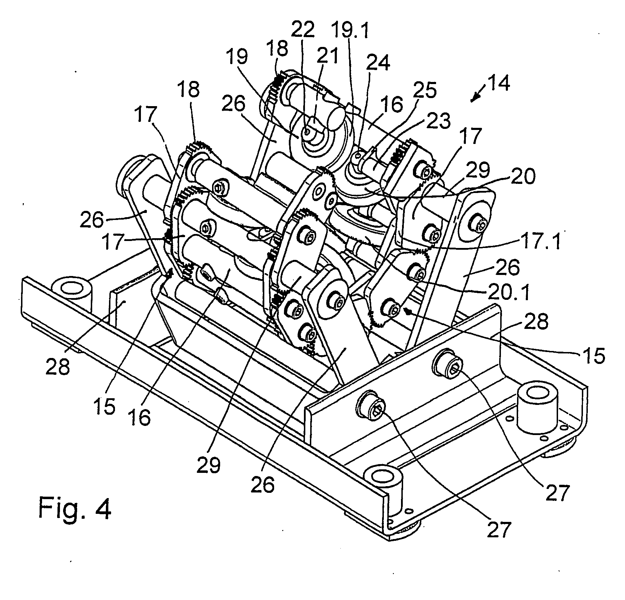

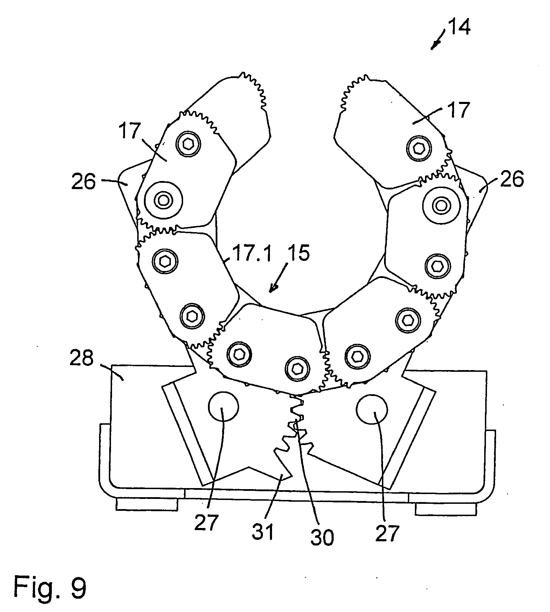

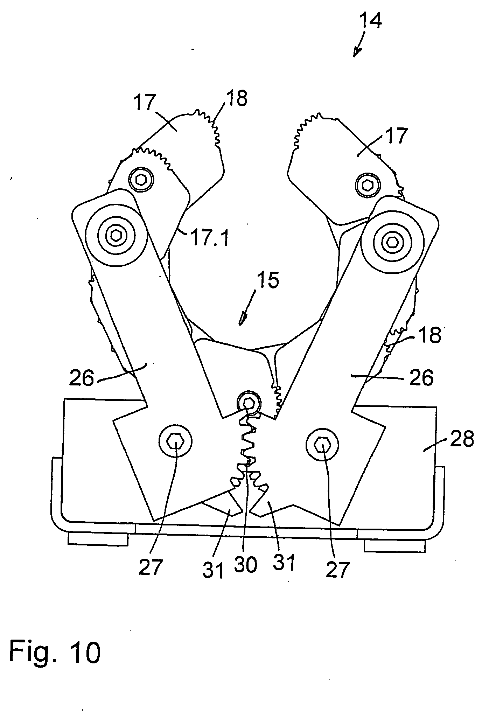

Wenn nun die Extrusionslinie auf einen kleineren zu fahrenden Nenndurchmesser eines zu produzierenden Rohres 5 eingestellt wird, ergibt sich ein konisches Übergangsstück mit sukzessiv abnehmendem Durchmesser. Die Rohrunterstützung 14 folgt dieser Durchmesseränderung selbsttätig bis sie letztendlich auf den kleineren zu fahrenden Durchmesser eingestellt ist. Diese selbsttätige Anpassung erfolgt durch Schwerkraftwirkung. Die zwischen den Abstützpunkten der Stützarme 26 angeordneten Kettenglieder 17, Kettenbolzen 16, Rollen 19 und 20, etc. haben nämlich ein wesentlich größeres Gesamtgewicht als die sich von den Abstützpunkten nach außen anschließenden Bauelemente der Rohrunterstützung 14. Aufgrund dieses Gewichtsunterschiedes werden die Stützarme 26 aufeinander zugeschwenkt, d.h. die Rohrunterstützung 14 fährt zu und umgibt das extrudierte Rohr kleineren Durchmessers nun auf einem größeren Umschlingungswinkel, wie aus der Darstellung gemäß Fig. 4 in Verbindung mit den Darstellungen gemäß den Fig. 9 und 10 hervorgeht. Wenn die Extrusionslinie wieder auf einen größeren Durchmesser umgestellt wird, ergibt sich zwischen dem kleineren und dem zu fahrenden größeren Durchmesser wiederum ein konisches Rohrübergangsstück, diesmal mit entgegen gesetzter Konizität, d.h. der Durchmesser vergrößert sich sukzessiv. Aufgrund dieser Durchmesservergrößerung wird die Rohrunterstützung 14 entgegen der Schwerkraftwirkung solange sukzessiv aufgefahren, bis der neue Nenndurchmesser des Rohres 5 erreicht ist. Die Rohrunterstützung 14 passt sich also auch hier selbsttätig dem neu zu fahrenden Rohrdurchmesser an.

In den Fig. 7 bis 10 in ein weiteres Ausführungsbeispiel der Erfindung erläutert. Es unterscheidet sich von dem oben stehenden Ausführungsbeispiel dadurch, dass die Rollen 19, 20 und ihre entsprechenden Lagerbauelemente zum Fortfall gekommen sind. Ein extrudiertes Rohr 5 liegt bei dieser Vorrichtung unter Gleitreibung direkt auf den Stirnflächen 17.1 der Kettenglieder 17 auf.

In einem anderen Ausführungsbeispiel der Erfindung kann anstelle von zwei voneinander beabstandeten Gelenkgliederketten 15 nur eine Gelenkgliederkette 15 mit mindestens in zwei Ebenen angeordneten Kettengliedern 17 zum Einsatz kommen. Dabei kann es ausreichend sein, bei nur in wenigen Ebenen angeordneten Kettengliedern 17 die Stützarme 26 nur auf einer Seite, d.h., bezogen auf die Zeichnungsebene, vor oder hinter der Gelenkgliederkette 15 vorzusehen.

Anstelle der selbsttätigen Verstellung der Rohrunterstützung 14 kann auch eine zwangsgesteuerte Verstellung vorgesehen sein. Dann müssten z.B. anstelle der Stützarme 26 aktive Glieder, z.B. Hydraulikkolben zur Anwendung kommen, die die Gelenkgliederkette bzw. Kette 15 aktiv verstellen.

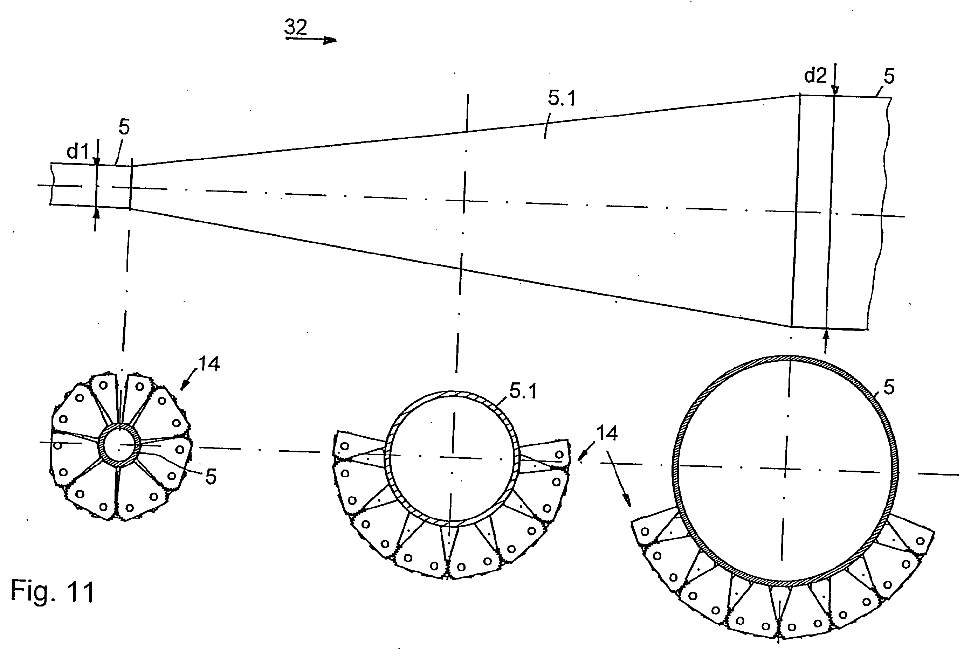

In Fig. 11 ist schematisch der Ablauf beim Verstellen der Rohrunterstützung 14 dargestellt. Bei diesem Ausführungsbeispiel wird die Extrusionslinie im laufenden Betrieb von dem kleinsten zu fahrenden Nenndurchmesser d1 auf den größten zu fahrenden Nenndurchmesser d2 umgestellt, wobei ein Pfeil 32 die Extrusionsrichtung symbolisiert. Zwischen den beiden Nenndurchmessern d1 und d2 ergibt sich ein konisches Rohrübergangstück 5.1.

Aus Fig. 11 ist ersichtlich, dass die Rohrunterstützung 14 das extrudierte Rohr 5 bei dem kleinsten zu fahrenden Nenndurchmesser d1 vollständig, d.h. auf 360° seines Umfangs umgibt. Aufgrund der Umstellung auf den Nenndurchmesser d2 vergrößert sich der Durchmesser im Rohrübergangsstück 5.1, so dass die Rohrunterstützung 14 sukzessiv aufgedrückt wird. In Fig. 11 ist in der mittigen Darstellung der Rohrunterstützung 14 ein Übergangsstadium gezeigt, während in der rechten Abbildung die Abstützung des extrudierten Rohres 5 beim größten zu fahrenden Nenndurchmesser d2 gezeigt ist.

Wenn von einem größeren auf einen kleineren Nenndurchmesser umgestellt wird, fährt die Rohrunterstützung 14 aufgrund des sich dann verringernden Durchmessers im Rohrübergangsstück 5.1 sukzessiv unter Schwerkraftwirkung zu. Sie passt sich also auch in dieser Situation selbsttätig an den neu zu fahrenden Nenndurchmesser an.

## Patentansprüche

1. Vorrichtung zur Unterstützung von Rohren in Extrusionslinien mit einer an einen jeweilig gefahrenen Rohrdurchmesser anpassbaren Rohrunterstützung (14), die eine an zumindest einem Teilumfang des Rohres (5) anliegende Gelenkgliederkette (15) aufweist, deren Kettenglieder (17) zum Rohr (5) hinweisende Stirnflächen (17.1) besitzen, **dadurch gekennzeichnet, dass** die Gelenkgliederkette (15) aus in mindestens zwei Ebenen angeordneten, sich von Ebene zu Ebene überlappenden Kettengliedern (17) besteht, die in den Überlappungsbereichen gelenkig miteinander verbunden sind, wobei die Kettenglieder (17) jeder Ebene an ihren einander zugewandten Enden identische Zahnradkonturen (18) aufweisen, die miteinander kämmen.

2. Vorrichtung nach Anspruch 1, **dadurch gekennzeichnet, dass** an ein links und rechts vom Scheitelpunkt der Gelenkgliederkette (15) angeordnetes Kettenglied (17) jeweils eine Abstützung (26) angreift.

3. Vorrichtung nach Anspruch 1 oder Anspruch 2, **dadurch gekennzeichnet, dass** mindestens zwei Gelenkgliederketten (15) mit mindestens in zwei Ebenen angeordneten Kettengliedern (17) durch Kettenbolzen (16) parallel zueinander beabstandet sind.

4. Vorrichtung nach einem der vorstehenden Ansprüche, **dadurch gekennzeichnet, dass** die zum extrudierten Rohr (5) hin weisenden Stirnflächen (17.1) der Kettenglieder (17) als Gleitflächen für das Rohr (5) ausgebildet sind.

5. Vorrichtung nach einem der vorstehenden Ansprüche 1 bis 3, **dadurch gekennzeichnet, dass** die Gelenkgliederkette (15) bzw. die Gelenkgliederketten (15) mit Rollen (19, 20) ausgestattet ist bzw. sind, deren Drehachsen (22, 24) parallel zu den Kettengliedern (17) angeordnet sind, und die die Stirnflächen (17.1) der Kettenglieder (17) zur Bildung von Rollflächen für das anliegende extrudierte Rohr (5) überragen.

## Claims

1. Device for supporting pipes in extrusion lines, having a pipe support (14) which can be adapted to a particular pipe diameter which is being conveyed and which pipe support has an articulated link chain (15) which bears against at least a partial periphery of the pipe (5) and the chain links (17) of which possess end faces (17.1) which point towards said pipe (5),
**characterised in that**
the articulated link chain (15) consists of chain links (17) which are arranged in at least two planes and overlap from plane to plane and which are connected to one another in an articulated manner in the overlapping areas, wherein the chain links (17) in each plane have, at their ends which face towards one another, identical gearwheel contours (18) which mesh with one another.

2. Device according to Claim 1,
**characterised in that**
a support (26) acts, in each case, on a chain link (17) which is arranged to the left and to the right of the apex of the articulated link chain (15).

3. Device according to Claim 1 or Claim 2,
**characterised in that**
at least two articulated link chains (15) having chain links (17) which are arranged at least in two planes are spaced apart, parallel to one another, by chain bolts (16).

4. Device according to one of the preceding claims,
**characterised in that**
the end faces (17.1), which point towards the extruded pipe (5), of the chain links (17) are constructed as sliding faces for said pipe (5).

5. Device according to one of the preceding Claims 1 to 3,
**characterised in that**
the articulated link chain (15) or the articulated link chains (15) is/are equipped with rollers (19, 20), the pivots (22, 24) of which are arranged parallel to the chain links (17) and which protrude beyond the end faces (17.1) of the chain links (17) for the purpose of forming rolling faces for the adjacent extruded pipe (5).

## Revendications

1. Dispositif destiné à supporter des tubes dans des lignes d'extrusion avec un support de tube (14), adaptable à un diamètre de tube respectivement produit, support de tube, qui présente une chaîne à maillons articulés (15) adjacente au moins à une partie de la circonférence du tube (5), chaîne, dont les maillons (17) possèdent des faces terminales (17.1) orientées vers le tube (5), **caractérisé en ce que** la chaîne à maillons articulés (15) est constituée de maillons (17) qui sont disposés sur au moins deux plans et se chevauchent d'un plan à l'autre, et qui sont reliés les uns aux autres de façon articulée dans les zones de chevauchement, les maillons (17) de chaque plan présentant à leurs extrémités, orientées les unes envers les autres, des contours (18) identiques en forme de roue dentée qui s'engrènent l'un dans l'autre.

2. Dispositif suivant la revendication 1, **caractérisé en ce qu'**un appui est appliqué à un maillon (17) disposé à gauche et à droite du sommet de la chaîne de maillons articulés (15).

3. Dispositif suivant la revendication 1 ou 2, **caractérisé en ce qu'**au moins deux chaînes à maillons articulés (15) avec des maillons (17) disposés sur au moins deux plans sont écartées, parallèlement l'une à l'autre, par des boulons de chaîne (16).

4. Dispositif suivant une des revendications précédentes, **caractérisé en ce que** les faces terminales (17.1) des maillons de chaîne (17) orientées vers le tube extrudé (5) sont conçues comme surfaces de glissement pour le tube (5).

5. Dispositif suivant l'une des revendications 1 à 3, **caractérisé en ce que** la(les) chaîne(s) à maillons articulés (15) est(sont) munie(s) de rouleaux (19, 20), dont les axes d'articulation (22, 24) sont disposés de façon parallèle aux maillons de chaîne (17) et font saillie au-delà des faces terminales (17.1) des maillons de chaîne (17) pour former des surfaces de roulement pour le tube extrudé adjacent (5).
